# EUROPEAN PATENT APPLICATION

(11) **EP 3 444 496 A1**
(43) Date of publication of application: **20.02.2019**
(21) Application number: 17781834.1
(22) Date of filing: 07.04.2017
(51) Int. Cl.: F16D 57/00

(54) **LIQUID DAMPING TYPE BRAKING SYSTEM**

(30) Priority: 13.04.2016 CN 201610227237; 13.04.2016 CN 201620304886 U
(71) Applicant: Zeng, Yibo, Wuhan, Hubei 430019 (CN)
(72) Inventor: Zeng, Yibo, Wuhan, Hubei 430019 (CN)
(74) Representative: Zeuner Summerer Stütz
(86) International application number: PCT/CN2017/079673
(87) International publication number: WO 2017/177858

(57) **Abstract**

A liquid damping type braking system comprises at least one pair of engaged gears (2, 4) disposed in a sealed gearbox (1), a gear axle (5) penetrating out of the gearbox (1) and connected to an external driving shaft, flowing channels (6, 7) respectively disposed on the two sides of the gears (2, 4), a braking liquid circulation channel which is formed in the manner that the braking liquid circulation channel penetrates out of the gearbox (1) and is connected to a braking liquid storage box (8), and at least one braking switch valve (9) disposed on the flowing channel. The purpose of decelerating the braking is achieved by controlling the opening and closing states of the braking switch valve (9). In the liquid damping type braking system, the gearbox (1) is structurally transformed and then applied to the braking field, the problems of large abrasion, poor braking effect, high braking cost and the like of a traditional friction braking material are resolved, and the phenomenon that the braking fails due to heating in the traditional friction braking is effectively avoided; and the liquid damping type braking system has a simple structure and low manufacturing cost, is convenient to use and maintain, is easy to operate, can easily conduct braking, is easy to control and is safe and reliable in braking, can form any braking characteristic curve needed by a device, and satisfies practical needs.

## Description

### TECHNICAL FIELD

The invention relates to a field of braking technology, and more particularly to a liquid damping type braking system.

### BACKGROUND OF THE INVENTION

Braking systems are very common in our production and life. In routine automobiles and mechanical devices, the braking system always affects the safety of our production and life. In general, the most widely used conventional friction type braking system is mainly composed of a brake support, a friction element and a brake releaser. However, the existing friction type braking system inevitably damages performances of friction materials due to a complicated structure of friction elements, a fast consumption of friction materials and a frictional heating of the friction type braking method, which results in a brake failure due to an insufficient resistance of a friction braking and thus causes a great loss to our lives and property.

### SUMMARY OF THE INVENTION

The object of this invention is to provide a liquid damping type braking system having simple structure, no material wear, good braking effect and low braking cost, and to solve the problems of the existing braking system.

In order to achieve the object, the following technical scheme is adopted in this invention.

A liquid damping type braking system, comprises a damping part and a brake control part, the damping part comprises a sealed gearbox fixed to a body of a device and at least one pair of engaged gears mated with an inner chamber of the gearbox, the engaged gears are provided in the gearbox, a driving axle of a driving gear is a brake shaft which extends out of the gearbox and connects to an external driving shaft or is an external driving shaft, two flowing channels are provided on both sides of the gearbox of the engaged gears respectively, extracting outlets are provide on two flowing channels, the extracting outlets are connected to two joints of a braking liquid storage box to form a brake liquid sealing circulation passage, the brake control part comprises at least one braking switch valve arranged on the circulation passage, a control end of the braking switch valve is connected to a brake control mechanism, an opening and closing state of the braking switch valve is controlled by the brake control mechanism to obtain a deceleration braking.

The braking switch valve comprises a first hydraulic switching valve and a second first hydraulic switching valve, two hydraulic switching valves are respectively disposed on passages of two flowing channels for controlling the opening and closing of the flowing channels respectively, two hydraulic switching valves have the same structure and both of them comprise a cylindrical housing, both sides of the cylindrical housing are provided with an opening to communicate with a blocked flowing channel, a switch sliding plug is disposed in the cylindrical housing, the switch sliding plugs of two hydraulic switching valves are respectively provided with a radial through hole, the radial through holes correspond to two flowing channels respectively, a reset spring is arranged between the switch sliding plug and a bottom of the cylinder, an outer end of the cylindrical housing is provided with a driving liquid inlet and a driving liquid outlet, both the driving liquid inlet and the driving liquid outlet of two hydraulic switching valves are connected to the brake control mechanism.

The brake control mechanism is a hydraulic driving device and it comprises an oil storage tank, an oil pump and a piston cylinder in sequence, a control end of the piston cylinder is connected to a brake operation mechanism, an output end of the piston cylinder is connected to oil inlets of the first hydraulic switching valve and the second hydraulic switching valve via a liquid inlet conduit, oil outlets of the first hydraulic switching valve and the second hydraulic switching valve are connected to the oil storage tank via a liquid outlet conduit, a liquid inlet solenoid valve and a liquid outlet solenoid valve are disposed on the liquid inlet conduit and the liquid outlet conduit respectively.

A liquid damping type braking system for an automobile comprises a damping part and a brake control part, the damping part comprises a sealed gearbox and at least one pair of engaged gears mating with an inner chamber of the gearbox, the engaged gears are arranged in the gearbox, a housing of the gearbox is fixed to a brake mounting base provided on a body of the automobile, a driving axle of a driving gear is a brake shaft which extends out of the gearbox and connects to an external driving shaft, two flowing channels are provided on both sides of the gearbox of the engaged gears respectively, two extracting outlets are respectively provided on the two flowing channels, two extracting outlets are connected to two joints of a braking liquid storage box via two connection conduits respectively to form a brake fluid sealing circulation passage, the brake control part comprises at least one braking switch valve arranged on the circulation passage, a control end of the braking switch valve is connected to a brake control mechanism, an opening and closing state of the braking switch valve is controlled by the brake control mechanism to obtain a deceleration braking.

The braking switch valve comprises a first hydraulic switching valve and a second hydraulic switching valve, two hydraulic switching valves are disposed on passages of the two flowing channels for controlling the opening and closing of the flowing channels respectively, two hydraulic switching valves have the same structure and both of them comprise a cylindrical housing, both sides of the cylindrical housing are provided with an opening respectively for communicating a blocked flowing channel, a switch sliding plug is disposed in the cylindrical housing, the switch sliding plugs of two hydraulic switching valves are respectively provided with a radial through holes, the radial through holes correspond to two flowing channels respectively, a reset spring is provided between the switch sliding plug and a bottom of the cylinder, an outer end of the cylindrical housing is provided with a driving liquid inlet and a driving liquid outlet, both the driving liquid inlet and the driving liquid outlet of two hydraulic switching valves are connected to the brake control mechanism.

The brake control mechanism is a hydraulic driving device and it comprises an oil storage tank, an oil pump and a piston cylinder in sequence, a brake operation mechanism of the piston cylinder is a brake pedal, an output end of the piston cylinder is connected to oil inlets of the first hydraulic switching valve and the second hydraulic switching valve via a liquid inlet conduit, oil outlets of the first hydraulic switching valve and the second hydraulic switching valve are connected to the oil storage tank via a liquid outlet conduit, a liquid inlet solenoid valve and a liquid outlet solenoid valve are respectively disposed on the liquid inlet conduit and the liquid outlet conduit, the liquid inlet solenoid valve and the liquid outlet solenoid valve are used as electrical control switches.

A fluid damping type braking system for a train comprises a damper part and a brake control part, the damping part comprises a sealed gearbox corresponding to each train wheel and at least one pair of engaged gears mating with an inner chamber of the gearbox, the engaged gears are provided in the gearbox, the gearbox is provided on an axle of the train wheel and is connected to the axle in a form of sliding sealing connection, a housing of the gearbox is fixed to a bogie of a carriage of the train, a driving axle of a driving gear is a brake shaft and is coaxial with the axle of the train wheel, two flowing channels are provided on both sides of the gearbox of the engaged gears, two extracting outlets are provide on two flowing channels respectively and the extracting outlets are connected to a braking liquid storage box via two connection conduits, the braking liquid storage box is provided on the bogie, the brake control part comprises a braking switch valve arranged on two flowing channels or two connection conduits, a control end of the braking switch valve is connected to a train brake control mechanism, an opening and closing state of the braking switch valve is controlled by the train brake control mechanism to obtain deceleration braking.

A front gearbox and a rear gearbox are respectively provided on both sides of a same bogie of the train, one braking liquid storage box is shared by the gearbox on the same side.

The braking switch valve comprises a first hydraulic switching valve and a second hydraulic switching valve, two hydraulic switching valves are provided on passages of two flowing channels respectively for controlling the opening and closing of the two flowing channels, two hydraulic switching valves have the same structure and both of them comprise a cylindrical housing, both sides of the cylindrical housing are respectively provided with an opening for communicating a blocked flowing channel, a switch sliding plug is disposed in the cylindrical housing, the switch sliding plugs of two hydraulic switching valves are respectively provided with a radial through hole, the radial through holes correspond to two flowing channels respectively, a reset spring is provided between the switch sliding plug and a bottom of the cylinder, an outer end of the cylindrical housing is provided with a driving liquid inlet and a driving liquid outlet, both the driving liquid inlet and the driving liquid outlet of two hydraulic switching valves are connected to a hydraulic drive device.

The hydraulic drive device comprises an oil storage tank, an electrical oil pump and a piston cylinder in sequence, a brake operation mechanism of the piston cylinder is a train control system, an output end of the piston cylinder is connected to oil inlets of the first hydraulic switching valve and the second hydraulic switching valve via a liquid inlet conduit, oil outlets of the first hydraulic switching valve and the second hydraulic switching valve are connected to the oil storage tank via a liquid outlet conduit, a liquid inlet solenoid valve and a liquid outlet solenoid valve are disposed on the liquid inlet conduit and the liquid outlet conduit respectively, the liquid inlet solenoid valve and the liquid outlet solenoid valve are used as electrical control switches.

The invention has the following advantages: (1) the gearbox is structurally transformed and then applied to the braking field, and the problems of large abrasion, poor braking effect, high braking cost and the like of a traditional friction braking material are resolved, and at the same time, the phenomenon that the braking fails due to heating in the traditional friction braking is effectively avoided; (2) the liquid damping type braking system of this invention will not cause a failure of braking when the strength of the transmission shaft, the gears and the gearbox housing is sufficient, and thereby effectively ensuring the safety of people's properties and lives; (3) the liquid damping type braking system of this invention has a simple structure and low manufacturing cost, and the liquid damping type braking system of this invention is convenient to use and maintain and is easy to operate. Also, the braking operation of this invention is easy, safe and reliable, and the liquid damping type braking system of this invention can form any braking characteristic curves needed by a device so as to satisfy practical needs.

### BRIEF DESCRIPTION OF THE DRAWINGS

FIG. 1 is a structural schematic diagram of an externally engaged liquid damping type braking system according to this invention;
FIG. 2 is a structural schematic diagram of a hydraulic switching valve and a gearbox of the externally engaged liquid damping type braking system according to this invention;
FIG. 3 is a structural schematic diagram of a damping part of the externally engaged liquid damping type braking system according to this invention;
FIG. 4 is a structural schematic diagram of a hydraulic switching valve and a gearbox of an internally engaged liquid damping type braking system according to this invention;
FIG. 5 is a structural schematic diagram of an embodiment of a liquid damping type braking system for an automobile according to this invention;
FIG. 6 is a structural schematic diagram of an embodiment of a liquid damping type braking system for a train according to this invention;
FIG. 7 is a structural schematic diagram of a hydraulic switching valve and a gearbox of an externally engaged liquid damping type braking system for a train according to this invention.

In the figures: 1-gearbox, 2-driven gear, 3-driven axle, 4-driving gear, 5-driving axle, 6, 7-flowing channel (6.1, 7.1-extracting outlet), 8-braking liquid storage box (8.1, 8.2-joint), 9-braking switch valve (9a-first hydraulic switching valve, 9b-second hydraulic switching valve), 9.1-cylindrical housing, 9.2-switch sliding plug, 9.3-reset spring, 9.4-driving liquid inlet, 9.5-driving liquid outlet, 9.6, 9.7-radial through hole, 10, 11-connection tube, 12-brake control mechanism,12.1-oil storage tank, 12.2-oil pump, 12.3-piston cylinder, 12.4-liquid inlet conduit, 12.5-liquid outlet conduit, 12.6-liquid inlet solenoid valve, 12.7-liquid outlet solenoid valve, 13-brake operating mechanism, 14- automobile wheel, 15- external driving shaft, 16-train wheel, 17-bogie, 18-handbrake.

### DETAILED DESCRIPTION OF THE EMBODIMENTS

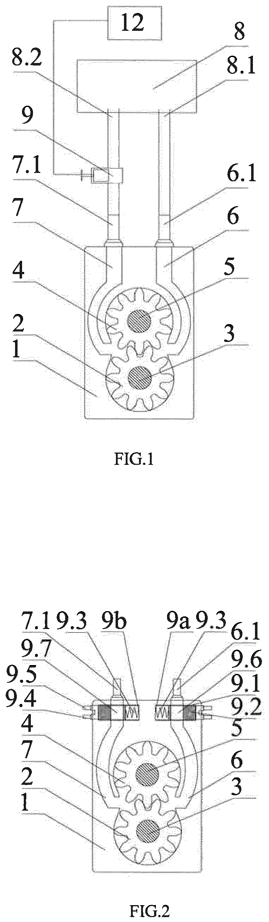

As shown in FIG. 1, an externally engaged liquid damping type braking system of this invention comprises a damping part and a brake control part. The damping part comprises a sealed gearbox 1 fixed to a device body and at least one pair of externally engaged gears which are disposed in the gearbox 1 and are mated with an inner chamber of the gearbox. A driven gear 2 is mounted in the gearbox 1 via a driven axle 3. A driving axle 5 of a driving gear 4 is a brake shaft which extends out of the gearbox and connects to an external driving shaft or is an external driving shaft. Flowing channels 6, 7 are provided on both sides of the gearbox of the externally engaged gear. Extracting outlets 6.1,7.1 are provide on two flowing channels 6, 7 respectively and the extracting outlets 6.1, 7.1 are connected to two joints 8.1, 8.2 of a braking liquid storage box 8 to form a brake liquid sealing circulation passage. The brake control part comprises at least one braking switch valve 9 disposed on the circulation passage. A control end of the braking switch valve 9 is connected to a brake control mechanism 12. The opening and closing state of the braking switch valve 9 is controlled by the brake control mechanism 12 to obtain a deceleration braking.

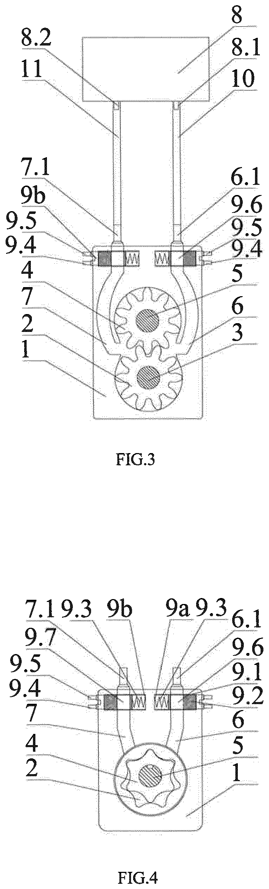

FIG2 and FIG3 show an embodiment of the hydraulic switching valve, the gearbox and the damping part of the externally engaged liquid damping type braking system of this invention.

The braking switch valve 9 is a hydraulic switch and comprises a first hydraulic switching valve 9a and a second first hydraulic switching valve 9b. The two hydraulic switching valves 9a, 9b are respectively disposed on passages of two flowing channels 6, 7 for respectively controlling the open and close of the flowing channels 6, 7. Two hydraulic switching valves 9a, 9b have the same structure. Both of them comprise a cylindrical housing 9.1. Both sides of the cylindrical housing 9.1 are provided with one opening to communicate with the blocked flowing channel. A switch sliding plug 9.2 is disposed in the cylindrical housing 9.1. Radial sliding holes 9.6, 9.7 are respectively provided on the switch sliding plugs 9.2 of two hydraulic switching valves 9a, 9b and correspond to the two flowing channels 6, 7. A reset spring 9.3 is provided between the switch sliding plug 9.2 and the bottom of the cylinder. An outer end of the cylindrical housing 9.1 is provided with a driving liquid inlet 9.4 and a driving liquid outlet 9.5. Both the driving liquid inlet 9.4 and the driving liquid outlet 9.5 of two hydraulic switching valves 9a, 9b are connected to a brake control mechanism 12.

FIG. 4 is a structural schematic diagram of a hydraulic switching valve and a gearbox of an internally engaged liquid damping type braking system according to this invention. Its structure is similar to the structure of the externally engaged liquid damping type braking system except for the following structures. An internally engaged driven gear 2 inside a gearbox 1 is an internal ring gear embedded in the gearbox. A driving axle 5 of a driving gear 4 is a brake shaft extending out of the gearbox to connect to an external driving shaft or is an external driving shaft. Other configurations, such as the hydraulic switching valve of the internally engaged liquid damping type braking system, are similar to those of the externally engaged liquid damping type braking system.

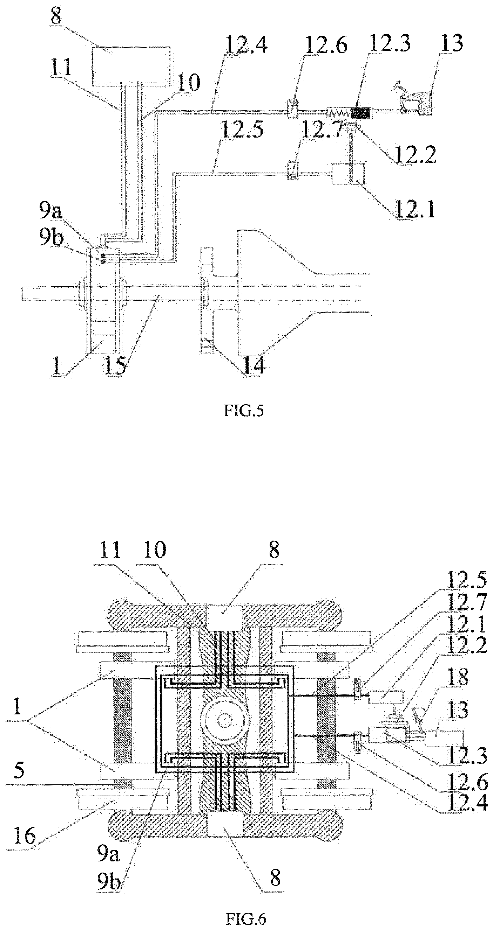

FIG 5 is a structural schematic diagram of an embodiment of a liquid damping type braking system for an automobile according to this invention.

This embodiment comprises a damping part and a brake control part. The damping part comprises a sealed gearbox 1 whose housing is fixed to a brake mounting base and at least one pair of externally engaged gears which are disposed in the gearbox 1 and are mated with an inner chamber of the gearbox. When the engaged gears inside the gearbox are externally engaged, a driven axle 3 of a driven gear 2 is mounted in the gearbox 1. A driving axle 5 of a driving gear 4 is a brake shaft and is coaxial with an axle of a train wheel 16. When the engaged gears in the gearbox are internally engaged, the driven gear 2 is an internal ring gear embedded in the gearbox. The driving axle 5 of the driving gear 4 is a brake shaft which extends out of the gearbox and connects to an external driving shaft or is an external driving shaft.

Flowing channels 6, 7 are respectively provided on both sides of the gearbox of the engaged gears. Two extracting outlets 6.1, 7.1 are respectively provided on the two flowing channels 6, 7. The extracting outlets 6.1, 7.1 are respectively connected to two joints 8.1, 8.2 of a braking liquid storage box 8 via two connection tubes 10, 11 to form a brake fluid sealing circulation passage. The hydraulic switching valve, the structure of the gearbox and the damping part shown in FIGS.2-3 are applied. A braking switch valve 9 comprises a first hydraulic switching valve 9a and a second hydraulic switching valve 9b. The two hydraulic switching valves 9a, 9b are respectively disposed on the passages of the two flowing channels 6, 7 for respectively controlling the opening and closing of the flowing channels 6, 7. Two hydraulic switching valves 9a, 9b have the same structure. Both of them comprise a cylindrical housing 9.1. Both sides of the cylindrical housing 9.1 are provided with one opening for communicating a blocked flowing channel. A switch sliding plug 9.2 is disposed in the cylindrical housing 9.1. The switch sliding plugs 9.2 of two hydraulic switching valves 9a, 9b are respectively provided with radial through holes 9.6, 9.7 which correspond to two flowing channels 6, 7. A reset spring 9.3 is provided between the switch sliding plug 9.2 and the bottom of the cylinder. An outer end of the cylindrical housing 9.1 is provided with a driving liquid inlet 9.4 and a driving liquid outlet 9.5. Both the driving liquid inlet 9.4 and the driving liquid outlet 9.5 of two hydraulic switching valves 9a, 9b are connected to a brake control mechanism 12. The opening and closing state of the braking switch valves 9a, 9b are controlled by the brake control mechanism 12 to obtain a deceleration braking.

The brake control mechanism 12 is a hydraulic driving device, and it comprises an oil storage tank 12.1, an oil pump 12.2 and a piston cylinder 12.3, which are connected in sequence. A brake operation mechanism 13 of the piston cylinder 12.3 is a brake pedal. An output end of the piston cylinder 12.3 is connected to oil inlets of the first hydraulic switching valve 9a and the second hydraulic switching valve 9b via a liquid inlet conduit 12.4. Oil outlets of the first hydraulic switching valve 9a and the second hydraulic switching valve 9b are connected to the oil storage tank 12.1 via a liquid outlet conduit 12.5. A liquid inlet solenoid valve 12.6 and a liquid outlet solenoid valve 12.7 are respectively disposed on the liquid inlet conduit 12.4 and the liquid outlet conduit 12.5. The liquid inlet solenoid valve 12.6 and the liquid outlet solenoid valve 12.7 are used as electrical control switches.

FIG. 6 shows an embodiment of a liquid damping type braking system for a train.

The liquid damping type braking system for a train comprises a damping part and a brake control part. The damping part comprises a sealed gearbox 1 corresponding to each train wheel. The gearbox 1 is provided on an axle of the train wheel 16 and is connected to the axle in a form of sliding sealing connection. A housing of the gearbox 1 is fixed to a bogie of a carriage. When the engaged gears inside the gearbox are externally engaged, a driven axle 3 of a driven gear 2 is mounted in the gearbox 1. A driving axle 5 of a driving gear 4 is a brake shaft and is coaxial with an axle of a train wheel 16. When the engaged gears in the gearbox are internally engaged, the driven gear 2 is an internal ring gear embedded in the gearbox. The driving axle 5 of the driving gear 4 is a brake shaft which extends out of the gearbox and connects to an external driving shaft or is an external driving shaft.

Flowing channels 6, 7 are provided on both sides of the gearbox of the engaged gears. Two extracting outlets 6.1,7.1 are respectively provide on two flowing channels 6, 7 in the gearbox and the extracting outlets 6.1, 7.1 are connected to a braking liquid storage box 8 via two connection tubes 10, 11. The braking liquid storage box 8 is provided on the bogie 17. The brake control part comprises a braking switch valve 9 disposed on two flowing channels 6,7 or two connection tubes 10,11. A control end of the braking switch valve 9 is connected to a train brake control mechanism 12. An opening and closing state of the braking switch valve 9 are controlled by the train brake control mechanism 12 to obtain a deceleration braking.

A front gearbox and a rear gearbox are respectively provided on two sides of the same bogie 17 of the train. One braking liquid storage box is shared by the gearboxes on the same side.

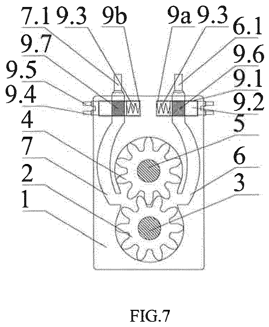

FIG. 7 is a structural schematic diagram of a hydraulic switching valve and a gearbox of an externally engaged liquid damping type braking system for a train.

A braking switch valve 9 employs a hydraulic switch and it comprises a first hydraulic switching valve 9a and a second hydraulic switching valve 9b which are respectively disposed on two flowing channels 6, 7. Two hydraulic switching valves 9a, 9b are respectively provided on the passages of two flowing channels 6, 7 for controlling the opening and closing of the two flowing channels 6, 7. The two hydraulic switching valves 9a, 9b are identical in structure. Both a driving liquid inlet 9.4 and a driving liquid outlet 9.5 of two hydraulic switching valve 9a, 9b are connected to a hydraulic driving device 12. The initial state of two hydraulic switching valves 9a, 9b for the train is opposite to that of the hydraulic switching valve for the automobile, and the initial state is closed.

As shown in FIG. 5 and FIG. 6, a brake control mechanism 12 is a hydraulic driving device, and it comprises an oil storage tank 12.1, an electrical oil pump 12.2 and a piston cylinder 12.3, which are connected in sequence. The piston cylinder 12.3 is controlled by a brake operation mechanism 13. An output end of the piston cylinder 12.3 is connected to oil inlets of the first hydraulic switching valve 9a and the second hydraulic switching valve 9b via a liquid inlet conduit 12.4. Oil outlets of the first hydraulic switching valve 9a and the second hydraulic switching valve 9b are connected to the oil storage tank 12.1 via a liquid outlet conduit 12.5. A liquid inlet solenoid valve 12.6 and a liquid outlet solenoid valve 12.7 are respectively disposed on the liquid inlet conduit 12.4 and the liquid outlet conduit 12.5. The liquid inlet solenoid valve 12.6 and the liquid outlet solenoid valve 12.7 are used as electrical control switches.

The deceleration braking process of the liquid damping type braking system for an automobile of this invention is as follows.

During a normal operation, the first hydraulic switching valve 9a and the second hydraulic switching valve 9b are opened. When the automobile needs to be braked in an emergency, the brake operating mechanism 13, namely the brake pedal, is manually pressed. An Electronic Control Unit (ECU) outputs an emergency brake signal to the liquid inlet solenoid valve 12.6 and the liquid outlet solenoid valve 12.7 for opening the liquid inlet solenoid valve 12.6 and closing the liquid outlet solenoid valve 12.7. The driving fluid is introduced into the first hydraulic switching valve 9a and the opening degree of the hydraulic switching valve 9a is gradually reduced until the hydraulic switching valve 9a is closed. Since the first hydraulic switching valve 9a is closed, the circulation flowing of the brake fluid is blocked. The brake fluid in the gearbox is discharged. The pressure of the sealed circulation passage is gradually increased. The reacting force acted on the surface of the gear is gradually increased when the gear engages and rotates, so that the rotational speed of the gear is gradually decreased. The rotational speed of the axle of the automobile 15 is decreased until it stops. When the automobile is reversed, the second hydraulic switching valve 9b is closed for obtain a braking. The principle is the same as above.

In the actual application process, due to the long duration of the normal running of the automobile, considering the long-term circulation of the brake fluid in the brake fluid circulation passage will cause the temperature of the brake fluid to be increased, a solenoid valve can be provided on the connection tubes by which the corresponding brake fluid enters to the gearbox when the automobile is normally moving forward. The solenoid valve is controlled by the Electronic Control Unit (ECU). When the automobile is normally moving forward, the solenoid valve is closed, thereby preventing the brake fluid from entering into the gearbox during a normal forward moving of the automobile, and thus finally avoids the affect caused by the long-term alternation of the brake fluid. When it is necessary to brake in an emergency, the solenoid valve is opened by a control of the Electronic Control Unit (ECU). The brake fluid enters to the gearbox. The rotation of the brake shaft is prevented by the resistance of the circulation flowing of the brake fluid in the gearbox, thereby obtaining the braking.

The implementation of an anti-lock braking system (ABS) is as follows. The liquid damping type braking system for an automobile of the present invention is also realized by providing the liquid inlet solenoid valve 12.6 and the liquid outlet solenoid valve 12.7 on the liquid inlet conduit 12.4 and the liquid outlet conduit 12.5 respectively. The electrical pump 12.2 is arranged between the piston cylinder 12.3 and the liquid storage tank 12.1. When the speed of the automobile is dropped to a setting value, the Electronic Control Unit (ECU) sends an instruction to close the liquid inlet solenoid valve 12.6 for cutting off the drive liquid and simultaneously open the liquid outlet solenoid valve 12.7 for discharging the drive liquid in the chambers of the first hydraulic switching valve 9a and the second hydraulic switching valve 9b to the liquid storage tank 12.1. Meanwhile, the first hydraulic switching valve 9a and the second hydraulic switching valve 9b are opened by the reset spring and the braking disappears immediately.

The principle of the deceleration braking of the train is similar to that of the automobile.

The differences between the liquid damping type braking system for a train and the liquid damping type braking system for an automobile are as follows. (1) The setting of the hydraulic switching valve is opposite to that of the automobile. The initial states of the two hydraulic switching valves 9a, 9b for the train are closed. When the train normally moves, the first hydraulic switching valve 9a and the second hydraulic switching valve 9b are opened by the control of the brake control mechanism 12. When the deceleration braking is required, the brake operating mechanism 13, namely a control system for a train, sends a braking instruction to start the following operations. The liquid inlet solenoid valve 12.6 is closed for preventing the drive liquid from entering and the liquid outlet solenoid valve12.7 is opened for discharging the drive liquid in the chambers of the first hydraulic switching valve 9a and the second hydraulic switching valve 9b to the liquid storage tank 12.1. At the same time, the first hydraulic switching valve 9a and the second hydraulic switching valve 9b are reset by the action of the reset spring. The first hydraulic switching valve 9a and the second hydraulic switching valve 9b are closed to achieve the braking. (2) In respect of the setting of the braking liquid storage box 8, one braking liquid storage box 8 is shared by the gearbox on the same side of the same bogie of each train. (3) When the carriages of the train need to be parked for a long time, a hand brake 18 can be operated to achieve the braking.

In the liquid damping type braking system of this invention, according to the practical situation, the first hydraulic switching valve 9a and the second hydraulic switching valve 9b are gradually controlled by the piston cylinder 12.3 from being fully opened to being closed, thereby controlling the brake speed of the brake shaft. Arbitrary braking characteristic curves required by the device are formed to meet the actual requirements.

The above embodiments describe the basic principles and main features of the present invention and the advantages of the present invention. Those skilled in the art should understand that the gear pump is structurally transformed and then applied to the braking field. The liquid damping type braking system has a simple structure, a low manufacturing cost, a good braking, a broader application prospect and strong market competitiveness. However, the protection scope of the present invention is not limited by the above embodiments. For example, other pumps having the similar structure and being simply modified according to the principle and method of this invention, the structure and location of the braking switch valve and the specific manner of the brake control mechanism can be arbitrarily chosen as long as the principle of the present invention is applied. The fluid circulation is blocked and the resistance is converted into the braking force to achieve the braking effect. Various changes and modifications of this invention without departing from the general spirit and scope of the present invention will fall into the scope of this invention.

## Claims

1. A liquid damping type braking system, comprising a damping part and a brake control part, **characterized in that**, the damping part comprises a sealed gearbox (1) fixed to a body of a device and at least one pair of engaged gears mated with an inner chamber of the gearbox, the engaged gears are provided in the gearbox (1), a driving axle (5) of a driving gear (4) is a brake shaft which extends out of the gearbox and connects to an external driving shaft or is an external driving shaft, two flowing channels (6, 7) are provided on both sides of the gearbox of the engaged gears respectively, extracting outlets (6.1,7.1) are provide on two flowing channels (6, 7), the extracting outlets (6.1, 7.1) are connected to two joints (8.1, 8.2) of a braking liquid storage box (8) to form a brake liquid sealing circulation passage, the brake control part comprises at least one braking switch valve (9) arranged on the circulation passage, a control end of the braking switch valve (9) is connected to a brake control mechanism (12), an opening and closing state of the braking switch valve (9) is controlled by the brake control mechanism (12) to obtain a deceleration braking.

2. The system of claim 1, **characterized in that**, the braking switch valve (9) comprises a first hydraulic switching valve (9a) and a second first hydraulic switching valve (9b), two hydraulic switching valves (9a, 9b) are respectively disposed on passages of two flowing channels (6,7) for controlling the opening and closing of the flowing channels (6,7) respectively, two hydraulic switching valves (9a, 9b) have the same structure and both of them comprise a cylindrical housing (9.1), both sides of the cylindrical housing (9.1) are provided with an opening to communicate with a blocked flowing channel, a switch sliding plug (9.2) is disposed in the cylindrical housing (9.1), the switch sliding plugs (9.2) of two hydraulic switching valves 9a, 9b are respectively provided with a radial through hole (9.6, 9.7), the radial through holes (9.6, 9.7) correspond to two flowing channels (6, 7) respectively, a reset spring (9.3) is arranged between the switch sliding plug (9.2) and a bottom of the cylinder, an outer end of the cylindrical housing (9.1) is provided with a driving liquid inlet (9.4) and a driving liquid outlet (9.5), both the driving liquid inlet (9.4) and the driving liquid outlet (9.5) of two hydraulic switching valves (9a, 9b) are connected to the brake control mechanism (12).

3. The system of claim 1 or claim 2, **characterized in that**, the brake control mechanism (12) is a hydraulic driving device and it comprises an oil storage tank (12.1), an oil pump (12.2) and a piston cylinder (12.3) in sequence, a control end of the piston cylinder (12.3) is connected to a brake operation mechanism (13), an output end of the piston cylinder (12.3) is connected to oil inlets of the first hydraulic switching valve (9a) and the second hydraulic switching valve (9b) via a liquid inlet conduit (12.4), oil outlets of the first hydraulic switching valve (9a) and the second hydraulic switching valve (9b) are connected to the oil storage tank (12.1) via a liquid outlet conduit (12.5), a liquid inlet solenoid valve (12.6) and a liquid outlet solenoid valve (12.7) are disposed on the liquid inlet conduit (12.4) and the liquid outlet conduit (12.5) respectively.

4. A liquid damping type braking system for an automobile, comprising a damping part and a brake control part, **characterized in that**, the damping part comprises a sealed gearbox (1) and at least one pair of engaged gears mating with an inner chamber of the gearbox, the engaged gears are arranged in the gearbox (1), a housing of the gearbox is fixed to a brake mounting base provided on a body of the automobile, a driving axle (5) of a driving gear (4) is a brake shaft which extends out of the gearbox and connects to an external driving shaft (15), (14) is an automobile wheel, two flowing channels (6, 7) are provided on both sides of the gearbox of the engaged gears respectively, two extracting outlets (6.1, 7.1) are respectively provided on the two flowing channels (6,7), two extracting outlets (6.1, 7.1) are connected to two joints (8.1, 8.2) of a braking liquid storage box (8) via two connection conduits (10, 11) respectively to form a brake fluid sealing circulation passage, the brake control part comprises at least one braking switch valve (9) arranged on the circulation passage, a control end of the braking switch valve (9) is connected to a brake control mechanism (12), an opening and closing state of the braking switch valve (9) is controlled by the brake control mechanism (12) to obtain a deceleration braking.

5. The system of claim 4, **characterized in that**, the braking switch valve (9) comprises a first hydraulic switching valve (9a) and a second hydraulic switching valve (9b), two hydraulic switching valves (9a, 9b) are disposed on passages of the two flowing channels (6, 7) for controlling the opening and closing of the flowing channels (6, 7) respectively, two hydraulic switching valves (9a, 9b) have the same structure and both of them comprise a cylindrical housing (9.1), both sides of the cylindrical housing (9.1) are provided with an opening respectively for communicating a blocked flowing channel, a switch sliding plug (9.2) is disposed in the cylindrical housing (9.1), the switch sliding plugs (9.2) of two hydraulic switching valves (9a, 9b) are respectively provided with a radial through holes (9.6, 9.7), the radial through holes (9.6, 9.7) correspond to two flowing channels (6, 7) respectively, a reset spring (9.3) is provided between the switch sliding plug (9.2) and a bottom of the cylinder, an outer end of the cylindrical housing (9.1) is provided with a driving liquid inlet (9.4) and a driving liquid outlet (9.5), both the driving liquid inlet (9.4) and the driving liquid outlet (9.5) of two hydraulic switching valves (9a, 9b) are connected to the brake control mechanism (12).

6. The system of claim 5, **characterized in that**, the brake control mechanism (12) is a hydraulic driving device and it comprises an oil storage tank (12.1), an oil pump (12.2) and a piston cylinder (12.3) in sequence, a brake operation mechanism (13) of the piston cylinder (12.3) is a brake pedal, an output end of the piston cylinder (12.3) is connected to oil inlets of the first hydraulic switching valve (9a) and the second hydraulic switching valve (9b) via a liquid inlet conduit (12.4), oil outlets of the first hydraulic switching valve (9a) and the second hydraulic switching valve (9b) are connected to the oil storage tank (12.1) via a liquid outlet conduit (12.5), a liquid inlet solenoid valve (12.6) and a liquid outlet solenoid valve (12.7) are respectively disposed on the liquid inlet conduit (12.4) and the liquid outlet conduit (12.5), the liquid inlet solenoid valve (12.6) and the liquid outlet solenoid valve (12.7) are used as electrical control switches.

7. A fluid damping type braking system for a train, comprising a damper part and a brake control part, **characterized in that**, the damping part comprises a sealed gearbox (1) corresponding to each train wheel and at least one pair of engaged gears mating with an inner chamber of the gearbox (1), the engaged gears are provided in the gearbox (1), the gearbox (1) is provided on an axle of the train wheel (16) and is connected to the axle in a form of sliding sealing connection, a housing of the gearbox (1) is fixed to a bogie of a carriage of the train, a driving axle (5) of a driving gear (4) is a brake shaft and is coaxial with the axle of the train wheel (16), two flowing channels (6, 7) are provided on both sides of the gearbox of the engaged gears, two extracting outlets are provide on two flowing channels (6, 7) respectively and the extracting outlets (6.1, 7.1) are connected to a braking liquid storage box (8) via two connection conduits (10, 11), the braking liquid storage box (8) is provided on the bogie (17), the brake control part comprises a braking switch valve (9) arranged on two flowing channels (6,7) or two connection conduits (10,11), a control end of the braking switch valve (9) is connected to a train brake control mechanism (12), an opening and closing state of the braking switch valve (9) is controlled by the train brake control mechanism (12) to obtain deceleration braking.

8. The system of claim 7, **characterized in that**, a front gearbox and a rear gearbox are respectively provided on both sides of a same bogie (17) of the train, one braking liquid storage box is shared by the gearbox on the same side.

9. The system of claim 7 or 8, **characterized in that**, the braking switch valve (9) comprises a first hydraulic switching valve (9a) and a second hydraulic switching valve (9b), two hydraulic switching valves (9a, 9b) are provided on passages of two flowing channels (6, 7) respectively for controlling the opening and closing of the two flowing channels (6,7), two hydraulic switching valves (9a, 9b) have the same structure and both of them comprise a cylindrical housing (9.1), both sides of the cylindrical housing (9.1) are respectively provided with an opening for communicating a blocked flowing channel, a switch sliding plug (9.2) is disposed in the cylindrical housing (9.1), the switch sliding plugs (9.2) of two hydraulic switching valves (9a, 9b) are respectively provided with a radial through hole (9.6, 9.7), the radial through holes (9.6, 9.7) correspond to two flowing channels (6, 7) respectively, a reset spring (9.3) is provided between the switch sliding plug (9.2) and a bottom of the cylinder, an outer end of the cylindrical housing (9.1) is provided with a driving liquid inlet (9.4) and a driving liquid outlet (9.5), both the driving liquid inlet (9.4) and the driving liquid outlet (9.5) of two hydraulic switching valves (9a, 9b) are connected to a hydraulic drive device (12).

10. The system of claim 9, **characterized in that**, the hydraulic drive device (12) comprises an oil storage tank (12.1), an electrical oil pump (12.2) and a piston cylinder (12.3) in sequence, a brake operation mechanism (13) of the piston cylinder (12.3) is a train control system, an output end of the piston cylinder (12.3) is connected to oil inlets of the first hydraulic switching valve (9a) and the second hydraulic switching valve (9b) via a liquid inlet conduit (12.4), oil outlets of the first hydraulic switching valve (9a) and the second hydraulic switching valve (9b) are connected to the oil storage tank (12.1) via a liquid outlet conduit (12.5), a liquid inlet solenoid valve (12.6) and a liquid outlet solenoid valve (12.7) are disposed on the liquid inlet conduit (12.4) and the liquid outlet conduit (12.5) respectively, the liquid inlet solenoid valve (12.6) and the liquid outlet solenoid valve (12.7) are used as electrical control switches.
